# EUROPÄISCHE PATENTSCHRIFT

(11) **EP 1 110 922 B1**
(45) Veröffentlichungstag und Bekanntmachung des Hinweises auf die Patenterteilung: **21.04.2004**
(21) Anmeldenummer: 00126389.6
(22) Anmeldetag: 02.12.2000
(51) Int. Cl.: C04B 7/36

(54) **Verfahren zur thermischen Behandlung von mehlförmigen Rohmaterialien**
Process of thermal treating of raw meal
Procédé de traitement thermique de farine crue

(30) Priorität: 23.12.1999 DE 19962536
(43) Veröffentlichungstag der Anmeldung: 27.06.2001
(73) Patentinhaber: KHD Humboldt Wedag AG, 51105 Köln (DE)
(72) Erfinder: Kuhnke, Stephan, Dr., 50374 Erftstadt (DE); Eckert, Carsten, 51061 Köln (DE); Hand, Andreas, 50733 Köln (DE)

(56) Entgegenhaltungen:
- EP-A- 0 764 614
- EP-A- 1 004 553
- US-A- 4 913 742

## Beschreibung

Die Erfindung betrifft ein Verfahren zur thermischen Behandlung von mehlförmigen Rohmaterialien, insbesondere bei der Herstellung von Zementklinker aus Rohmehl, das in wenigstens einem vom Abgas eines Drehrohrofens durchströmten Wärmetauscherstrang insbesondere Zyklonschwebegaswärmetauschersystem vorerhitzt, in einer Vorcalcinationsstufe calciniert und in der Sinterzone des Drehrohrofens zu Zementklinker gebrannt wird, der in einem nachgeschalteten Kühler gekühlt wird, wobei in der mit Brennstoff versorgten Vorcalcinationsstufe der Abgasstrom des Drehrohrofens und ggf. ein Abluftstrom (Tertiärluft) des Klinkerkühlers getrennt oder gemeinsam zur Vorcalcinierung des Rohmehls genutzt werden.

Verfahren der oben beschriebenen Art, bekannt z. B. aus der EP-B-0 497 937, müssen in der Lage sein, in der dem Drehrohrofen vorgeschalteten, mit Zweitfeuerungen ausgestatteten Vorcalcinationsstufe ein hochgradig calciniertes Rohmehl vor Einführung in der Drehrohrofen zu erzeugen und bei möglichst niedrigem spezifischen Gesamtenergiebedarf Zementklinker herzustellen. Gleichzeitig werden die Erbauer und Betreiber von Zementklinkerproduktionslinien mit immer schärferen Forderungen nach niedrigen Emissionswerten bei Schadstoffen wie CO und NOₓ konfrontiert.

Zur Reduzierung des Schadstoffs NOₓ ist es bekannt, in der Drehofenabgassteigleitung Brennstoff unterstöchiometrisch, d. h. mit Sauerstoffunterschuß zu verbrennen zwecks Schaffung einer CO-haltigen Reduktionszone zur Reduktion des Schadstoffes NOₓ, der insbesondere durch Hochtemperaturverbrennung im Drehrohrofen gebildet worden ist (thermisches NOₓ). Das in der NOₓ-Reduktionszone des Drehofenabgaskanals nicht verbrauchte CO sowie im Vorcalcinator ggf. zunächst nicht verbrannte Festbrennstoffpartikel werden durch den Sauerstoff eines aus dem Klinkerkühler eingeführten Tertiärluftstroms nachverbrannt, wobei dieser Restausbrand durch die schwanenhalsförmige Strömungsumlenkung der Suspension in der Vorcalcinierstufe begünstigt wird, besonders wenn im Bereich der Strömungsumlenkung noch eine Wirbelkammer bzw. Mischkammer angeordnet ist.

Trotz dieser den Restausbrand in der Vorcalcinationsstufe fördernden Maßnahmen ist aber nicht ganz ausgeschlossen, daß es Fälle geben kann, bei denen CO-Stöße bzw. CO-Strähnen aus der Vorcalcinationsstufe mit dem Abgas in das Zyklonschwebegaswärmetauschersystem gelangen können, insbesondere bei schwankender Festbrennstoffzudosierung zum Calcinator sowie beim Einsatz von sogenannten Sekundärbrennstoffen, wenn, wie z. B. aus der EP-B-0 439 824 bekannt, im Zementklinkerherstellungsprozeß ganze Altreifen entsorgt werden, die im Guteinlaufbereich des Drehrohrofens mit Sauerstoffüberschuß verbrennen sollen, der enthalten in überschüssiger Sekundärluft durch den ganzen Drehrohrofen hindurchgezogen werden muß. Durch die stoßweise Altreifenverbrennung sind dabei auftretende unerwünschte CO-Stöße praktisch unvermeidlich.

Abgesehen vom Nachteil der unvollständigen Brennstoffausnutzung gefährden CO-Stöße und unverbrannte Kohlenwasserstoffe im Abgas einer Zementklinkerproduktionslinie aber den sicheren Betrieb eines Abgasentstaubers in Gestalt eines elektrostatischen Staubabscheiders (Elektrofilters), weswegen solche Staubabscheider mit CO-Abgasanalysatoren ausgestattet sind, die beim Auftreten eines CO-Stoßes, wenn ein oberer CO-Grenzwert überschritten wird, das Elektrofilter abschalten. Um derartige Abschaltungen sowie Emissionen an CO und unverbrannten Kohlenwasserstoffen zu vermeiden, die bei unvollständiger Verbrennung durch lokalen Luftmangel aufgrund lokaler Unvermischtheiten von Brennstoff und Luft und/oder durch ungleichmäßige Luft- oder Brennstoffdosierung hervorgerufen werden würden, hat man Zementklinkerproduktionslinien durch Regeleingriff auf das Saugzuggebläse des Gesamtabgases in aller Regel mit einem überhöhten Gesamt-Sauerstoffüberschuß bzw. Luftüberschuß betrieben, z. B. mit einer Luftzahl λ von 1,3 statt λ von z. B. 1,1 bis 1,2, was durch erhöhte Brennstoff- und Stromkosten den wirtschaftlichen Betrieb der Zementklinkerproduktionslinie gefährdet und was sich negativ auf die NOₓ-Emissionen auswirkt.

Der Erfindung liegt die Aufgabe zugrunde, ein Verfahren zur wirtschaftlichen Herstellung von Zementklinker in einer Zementklinkerproduktionslinie mit Rohmehlvorwärmer, Vorcalcinationsstufe, Drehrohrofen und Klinkerkühler zu schaffen, wobei der für alle Brennstellen erforderliche Gesamt-Sauerstoffüberschuß, d. h. das Verhältnis Gesamtsauerstoff zu Gesamtbrennstoff, oft auch als λ-Wert bezeichnet, möglichst niedrig liegt, ohne daß dabei selbst bei Einsatz von ungleichmäßig dosierten Sekundärbrennstoffen unerwünscht hohe Spitzen und Emissionen an CO und/oder unverbrannten Kohlenwasserstoffen auftreten.

Diese Aufgabe wird erfindungsgemäß mit einem Verfahren mit den Maßnahmen des Anspruchs 1 gelöst. Vorteilhafte Ausgestaltungen der Erfindung sind in den Unteransprüchen angegeben.

Beim erfindungsgemäßen Verfahren wird vorgeschlagen, im Abgasweg der Vorcalcinationsstufe der Zementklinkerherstellungsanlage den Gehalt an CO und/oder (unverbrannten) Kohlenwasserstoffen und/oder NO und /oder anderen Verbrennungsprodukten (CO₂, O₂, H₂O) kontinuierlich zu messen und in Abhängigkeit dieser Meßgröße einen Regeleingriff auf die Menge eines in die Vorcalcinationsstufe einzudüsenden Oxidationsmittels und/oder Katalysators vorzunehmen, in der Weise, daß bei ansteigendem Gehalt an CO und/oder unverbrannten Kohlenwasserstoffen die eingedüste Menge an Oxidationsmittel und/oder Katalysator erhöht wird, und umgekehrt. Wird bei der Messung ein Anwachsen des Gehalts an CO und/oder unverbranntem Kohlenwasserstoff z. B. anläßlich eines oben beschriebenen auftretenden CO-Stoßes festgestellt, so wird bei Überschreiten eines vorbestimmten oberen Grenzwerts, z. B. 1,6 bis 1,8 % CO in denjenigen Abschnitt der Vorcalcinationsstufe, in welchem der Restausbrand sowie die Restcalcination erfolgen soll, zur Beschleunigung des chemischen Reaktionsverlaufes der Oxidation das Oxidationsmittel und/oder der Katalysator eingedüst, wobei sich die eingedüste Menge nach dem erforderlichen Abbau an CO und/oder unverbrannten Kohlenwasserstoffen richtet, bis ein unterer Grenzwert von z. B. 1,0 % CO gemessen wird.

Der Eindüsungszeitpunkt sowie die eingedüste Menge an Oxidationsmittel und/oder Katalysator können nicht nur von der Abgasanalyse bestimmt werden, sondern auch von einem Tendenzwert, der von einem Rechner aus den an allen Brennstellen der Zementklinkerproduktionslinie jeweils ermittelten aktuellen Verhältnissen von Brennstoff zu Sauerstoff errechnet wird. Jedenfalls sollen die Meßgrößen bzw. Rechengrößen ohne Zeitverzögerung nach möglichst geringer Meßzeit zur Verfügung stehen, um den Verbrauch an Oxidationsmittel und/oder Katalysator möglichst gering zu halten.

Als den chemischen Reaktionsverlauf der Oxidation in der Zementklinkerproduktionslinie beschleunigendes Oxidationsmittel können Luft, mit O₂ angereicherte Luft und/oder reiner Sauerstoff und/oder ein Stoff aus der Gruppe der Peroxide, z. B. Wasserstoffperoxid und/oder ein Stoff aus der Gruppe der Perborate, z. B. Natriumperborat und/oder aus der Gruppe der Permanganate, z. B. Kaliumpermanganat, und/oder aus der Gruppe der Nitrate, z. B. Kaliumnitrat, und/oder Halogenate, z. B. Kaliumperchlorat, und/oder Oxide und Sauerstoffsäuren der Halogene, z. B. Perchlorsäure, und/oder Salpetersäureester, und/oder Salpetersäure, und/oder Nitrotoluole eingesetzt werden, wobei solche sauerstoffhaltigen Verbindungen ihren Sauerstoff besonders bei Erhitzung verhältnismäßig leicht abgeben. Als Katalysator können im Zementklinkerherstellungsprozeß verwertbare feinkörnige die Verbrennungsreaktion fördernde Stoffe eingesetzt werden, wie z. B. bestimmte Zementrohmehle und/oder Rohmehlkomponenten und/oder Nebengruppenelemente und deren Verbindungen wie z. B. Eisenoxid oder dessen metallorganische Verbindungen.

Mit dem erfindungsgemäßen Verfahren werden wenigstens die folgenden Vorteile erreicht:

Die Zementklinkerherstellung ist wirtschaftlich, weil die Verbrennungsprozesse in der Zementklinkerproduktionslinie, insbesondere auch in der Vorcalcinationsstufe bei möglichst niedrigem Sauerstoffüberschuß erfolgen. Die Abgasverluste sind minimiert, die Vermeidung von CO-Spitzen im Abgas führt zu weniger häufigen Abschaltungen von Elektrofiltern. Schließlich können beim erfindungsgemäßen Zementklinkerherstellungsverfahren auch schwer dosierbare Sekundärbrennstoffe und/oder stückige Brennstoffe wie z. B. ganze Altreifen gefahrloser eingesetzt werden, d. h. auch ein stark schwankendes Brennstoffangebot ist beherrschbar. Vom erfindungsgemäßen Verfahren können auch solche Zementklinkerbrennanlagen profitieren, bei denen ein Brennstoffvergasungsreaktor zum Einsatz kommt, in dem Sekundärbrennstoffe mit schwankenden Brennstoffqualitäten vergast werden. Schließlich können durch die geregelte Eindüsung des eingesetzten Oxidationsmittels und/oder Katalysators die dabei eingesetzten Stoffe gleichzeitig nutzbringend entsorgt werden.

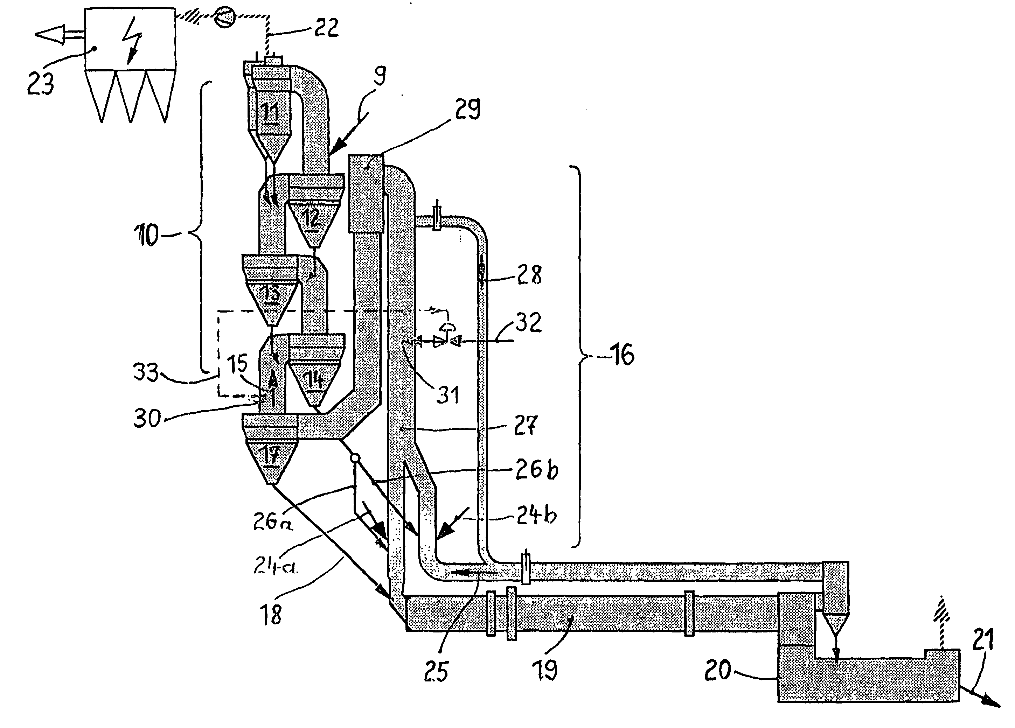

Die Erfindung und deren weitere Merkmale und Vorteile werden anhand des in der Zeichnung schematisch dargestellten Ausführungsbeispieles näher erläutert.

Die Zeichnung zeigt in schematischer Darstellung eine zur Durchführung des erfindungsgemäßen Verfahrens geeignete Anlage zur Herstellung von Zementklinker aus Zementrohmehl, das bei 9 in die Vorwärmstufe 10 aufgegeben wird, wo es nacheinander die Zyklonschwebegaswärmetauscher 11 bis 14 im kombinierten Gleich/-Gegenstrom zum heißen Abgas 15 einer Vorcalcinationsstufe 16 durchwandert, um im untersten Zyklon 17 vom heißen Abgasstrom 15 abgetrennt und als hochgradig (z. B. 95 %) calciniertes Zementrohmehl 18 in die Einlaufkammer des Drehrohrofens 19 eingeführt zu werden, in dessen Sinterzone es zu Zementklinker gebrannt wird, der anschließend in einem Klinkerkühler 20, z. B. Rostkühler abgekühlt wird. Der abgekühlte Zementklinker verläßt den Kühler 20 bei 21.

Das am Zementrohmehl abgekühlte Abgas verläßt die Vorwärmstufe 10 der Anlage bei 22. Dieses Abgas 22 wird in einem Staubabscheider, in der Regel elektrostatischen Staubabscheider 23 (Elektrofilter) von Staub befreit und anschließend über einen in der Zeichnung nicht dargestellten Hauptkamin als Abgas abgezogen.

In der mit Brennstoff 24a, 24b und Tertiärluft 25 des Klinkerkühlers versorgten Vorcalcinationsstufe 16 wird das aus der zweituntersten Zyklonstufe 14 austretende vorgewärmte Zementrohmehl 26a, 26b hochgradig calciniert. Dabei wird der Brennstoff 24a in der vom Drehofen 19 kommenden Ofenabgassteigleitung mit Vorteil unterstöchiometrisch verbrannt zwecks Erzeugung einer CO-haltigen Reduktionszone zur Reduktion des im Drehofenabgas enthaltenen Schadstoffs NOₓ, während der Brennstoff 24b in der vom Klinkerkühler kommenden Tertiärluft 25 mit Vorteil überstöchiometrisch verbrannt wird. Der Restausbrand des in der Reduktionszone 27 zunächst überschüssig gebliebenen CO und ggf. unverbrannt gebliebene Kohlenwasserstoffe sollen durch Sauerstoff aus überschüssiger Tertiärluft 25 sowie aus einem weiteren Tertiärluft-Teilstrom 28 erfolgen, der in einen höher gelegenen Bereich der Calcinierstufe 16 eingeführt wird. Zwecks intensiver Vermischung der Reaktionspartner kann im Bereich der Strömungsumlenkung der schwanenhalsförmigen Calcinierstufe noch eine Wirbelkammer bzw. Mischkammer 29 angeordnet sein.

Im Weg des Abgases 15 der Vorcalcinationsstufe 16 wird an einer Meßstelle 30 der im Abgas 15 enthaltene Gehalt an CO und/oder (unverbrannten) Kohlenwasserstoffen und/oder NO und/oder anderen Verbrennungsprodukten (CO₂, O₂, H₂O) kontinuierlich gemessen, und zwar mit einer Meßeinrichtung, bei der das Analysenergebnis ohne Zeitverzögerung zur Verfügung steht. In Abhängigkeit dieser Meßgröße kann ein Regeleingriff auf die Menge eines in die Vorcalcinationsstufe 16 etwa an der Stelle 31 des aufsteigenden Rohrleitungsastes einzudüsenden Oxidationsmittels und/oder Katalysators 32 erfolgen. Durch das eingedüste Mittel wird der chemische Reaktionsverlauf der Oxidation in der mit Brennstoff versorgten Calcinationsstufe 16 beschleunigt, wodurch verhindert werden kann, daß der im Abgasstrom gemessene Gehalt an CO einen vorgegebenen Maximalwert von z. B. 1,6 bis 1,8 % überschreitet. Bei deutlicher Unterschreitung dieses Maximalwertes wird die Eindüsung des Sauerstoffträgers und/oder Katalysators wieder eingestellt. Die Eindüsung erfolgt also diskontinuierlich. Die Signalleitung von der Meßstelle 30 zum Regelorgan des einzudüsenden Oxidationsmittels/Katalysators 32 ist mit 33 angezeigt.

Das Oxidationsmittel/Katalysator 32 könnte zumindest teilweise statt in das Abgas auch in die Tertiärluft oder auch in das zu behandelnde Rohmehl eingeführt werden.

Die Erfindung ist auch anwendbar für Zementklinkerproduktionslinien, die mit nur einer Feuerung (Primärfeuerung) im Drehrohrofen arbeiten, wobei aber die Dosierung der Brennstoffe und/oder deren Heizwerte so großen Schwankungen unterliegen, daß hierdurch erhöhte Emissionen an CO und/oder unverbrannten Kohlenwasserstoffen auftreten können. Außerdem ist die Erfindung auch anwendbar bei Verfahren, bei denen der Zweitbrennstoff in den Ofeneinlauf oder über eine Schleuse in den Drehofen eingeführt wird.

## Patentansprüche

1. Verfahren zur thermischen Behandlung von mehlförmigen Rohmaterialien bei der Herstellung von Zementklinker aus Rohmehl, das in wenigstens einem vom Abgas eines Drehrohrofens (19) durchströmten Wärmetauscherstrang insbesondere Zyklonschwebegaswärmetauschersystem (10) vorerhitzt, in einer Vorcalcinationsstufe (16) calciniert und in der Sinterzone des Drehrohrofens zu Zementklinker gebrannt wird, der in einem nachgeschalteten Kühler (20) gekühlt wird, wobei in der mit Brennstoff versorgten Vorcalcinationsstufe (16) der Abgasstrom des Drehrohrofens (19) und ggf. ein Abluftstrom (Tertiärluft) des Klinkerkühlers (20) getrennt oder gemeinsam zur Vorcalcinierung des Rohmehls genutzt werden,
**dadurch gekennzeichnet, dass** im Abgasweg (15) der Vorcalcinationsstufe (16) der Gehalt an CO und/oder Kohlenwasserstoffen und/oder NO und/oder anderen Verbrennungsprodukten (CO₂, O₂, H₂O) kontinuierlich gemessen (30) wird und dass in Abhängigkeit dieser Messgröße ein Regeleingriff auf die Menge eines in die Vorcalcinationsstufe (16) einzudüsenden Oxidationsmittels und/oder Katalysators (32) erfolgt in der Weise, dass bei ansteigendem Gehalt an CO und/oder unverbrannten Kohlenwasserstoffen die eingedüste Menge an Oxidationsmittel und/oder Katalysator erhöht wird, und umgekehrt.

2. Verfahren nach Anspruch 1,
**dadurch gekennzeichnet, daß** die eingedüste Menge an Oxidationsmittel und/oder Katalysator (32) vom erforderlichen Grad des Abbaus des im Abgasweg (15) der Vorcalcinationsstufe (16) gemessenen Gehalts an CO und/oder (unverbrannten) Kohlenwasserstoffen und/oder NO und/oder anderen Verbrennungsprodukten (CO₂, O₂, H₂O) zwecks Einhaltung vorgegebener Grenzwerte bestimmt wird.

3. Verfahren nach Anspruch 1,
**dadurch gekennzeichnet, daß** von einem Rechner aus den an allen Brennstellen der Zementklinkerproduktionslinie jeweils ermittelten aktuellen Verhältnissen von Brennstoff zu Sauerstoff (O₂) ein Tendenzwert errechnet wird, der zusätzlich oder anstelle der Meßgrößenwerte CO und/oder Kohlenwasserstoffe und/oder NO und/oder andere Verbrennungsprodukte (CO₂, O₂, H₂O) für den Regeleingriff auf die eingedüste Menge an Oxidationsmittel und/oder Katalysator 32 verwendet wird.

4. Verfahren nach einem der Ansprüche 1 bis 3,
**dadurch gekennzeichnet, daß** als Oxidationsmittel (32) Luft, mit O₂ angereicherte Luft, reiner Sauerstoff und/oder Peroxide und/oder Perborate und/oder Permanganate und/oder Nitrate und/oder Halogenate eingesetzt werden.

5. Verfahren nach einem der Ansprüche 1 bis 3,
**dadurch gekennzeichnet, daß** als Katalysator (32) ein im Zementklinkerherstellungsprozeß verwertbarer feinkörniger die Verbrennungsreaktion fördernder Stoff eingesetzt wird.

## Claims

1. Process for the heat treatment of raw materials in meal form during the production of cement clinker from raw meal which is preheated in at least one heat exchanger section, in particular cyclone suspension heat exchanger system (10), through which the exhaust gas from a rotary tubular kiln (19) flows, is calcined in a preliminary calcining stage (16) and is burnt in the sintering zone of the rotary tubular kiln to form cement clinker, which is cooled in a downstream cooler (20), the exhaust-gas stream from the rotary tubular kiln (19) and if appropriate an outgoing air stream (tertiary air) from the clinker cooler (20), separately or together, being used for the preliminary calcining of the raw meal in the preliminary calcining stage (16), which is supplied with fuel, **characterized in that** in the exhaust-gas path (15) of the preliminary calcining stage (16), the levels of CO and/or hydrocarbons and/or NO and/or other combustion products (CO₂, O₂, H₂O) is measured (30) continuously, and **in that** a control intervention acting upon the quantity of a catalyst and/or oxidizing agent (32) which is to be injected into the preliminary calcining stage (16) is carried out as a function of this measured variable, in such a way that as the levels of CO and/or unburnt hydrocarbons rise, the quantity of catalyst and/or oxidizing agent injected is increased, and vice versa.

2. Process according to Claim 1, **characterized in that** the quantity of catalyst and/or oxidizing agent (32) injected is determined from the required degree of abatement of the levels of CO and/or (unburnt) hydrocarbons and/or NO and/or other combustion products (CO₂, O₂, H₂O) measured in the exhaust-gas path (15) of the preliminary calcining stage (16), in order to maintain predetermined limit values.

3. Process according to Claim 1, **characterized in that** a computer is used to calculate a trend value from the current ratios of fuel to oxygen (O₂) which are determined at each of the combustion locations in the cement clinker production line, and this trend value is used, in addition to or instead of the measured variable values for CO and/or hydrocarbons and/or NO and/or other combustion products (CO₂, O₂, H₂O) for the control intervention acting upon the injected quantity of oxidizing agent and/or catalyst (32).

4. Process according to one of Claims 1 to 3, **characterized in that** the oxidizing agent (32) used is air, O₂-enriched air, pure oxygen and/or peroxides and/or perborates and/or permanganates and/or nitrates and/or halogenates.

5. Process according to one of Claims 1 to 3, **characterized in that** the catalyst (32) used is a fine-grained substance which promotes the combustion reaction and can be utilized in the cement clinker production process.

## Revendications

1. Procédé en vue du traitement thermique de matières brutes farineuses lors de la fabrication de clinker de ciment à partir de farine crue, qui est préchauffée dans au moins un conduit d'échangeur thermique traversé par le gaz de rejet d'un four rotatif (19), en particulier, d'un système d'échangeur thermique par mise en suspension des gaz à cyclone (10), qui est calciné dans une étape de calcination préalable (16) et qui est brûlé dans la zone de frittage du four rotatif pour former le clinker de ciment, qui est refroidi dans le refroidisseur intercalé à la suite (20), le courant de gaz de rejet du four rotatif (19) et, le cas échéant, un courant d'air de rejet (air tertiaire) du refroidisseur de clinker (20) étant utilisés, séparément ou simultanément, dans l'étape de calcination préalable alimentée à l'aide du combustible en vue de la calcination préalable de la farine crue,
**caractérisé en ce que**, dans le trajet du gaz de rejet (15) de l'étape de calcination préalable (16), la teneur en CO et/ou en hydrocarbures et/ou en NO et/ou en d'autres produits de combustion (CO₂, O₂, H₂O) est mesurée (30) en continu et **en ce qu'**en fonction de cette grandeur de mesure, une intervention de régulation sur la quantité d'un agent d'oxydation et/ou d'un catalyseur (32) à injecter dans l'étape de calcination préalable (16) se fait d'une manière telle qu'en cas de teneur croissante en CO et/ou en hydrocarbures non brûlés, la quantité injectée en agent d'oxydation et/ou en catalyseur est augmentée, et inversement.

2. Procédé selon la revendication 1, **caractérisé en ce que** la quantité injectée en agent d'oxydation et/ou en catalyseur (32) est déterminée par le degré nécessaire de la dégradation de la teneur, mesurée dans le trajet de gaz de rejet (15) de l'étape de calcination préalable (16), en CO et/ou en hydrocarbures (non brûlés) et/ou en NO et/ou en d'autres produits de combustion (CO₂, O₂, H₂O) dans le but du maintien de valeurs limites prédéfinies.

3. Procédé selon la revendication 1, **caractérisé en ce que** l'on calcule, grâce à un processeur, à partir des rapports actuels de combustible à oxygène (O₂), déterminés, à chaque fois, en tous les points de combustion de la ligne de production de clinker de ciment, une valeur de tendance, qui est utilisée, en plus ou à la place des valeurs de mesure de CO et/ou d'hydrocarbures et/ou de NO et/ou d'autres produits de combustion (CO₂, O₂, H₂O), pour l'intervention de régulation sur la quantité injectée en agent d'oxydation et/ou en catalyseur 32.

4. Procédé selon l'une quelconque des revendications 1 à 3, **caractérisé en ce que** l'on utilise, en tant qu'agent d'oxydation (32), de l'air, de l'air enrichi en oxygène, de l'oxygène pur et/ou des peroxydes et/ou des perborates et/ou des permanganates et/ou des nitrates et/ou des halogénates.

5. Procédé selon l'une quelconque des revendications 1 à 3, **caractérisé en ce que** l'on utilise, en tant que catalyseur (32), une substance, favorisant la réaction de combustion, à grains fins, récupérable dans le processus de fabrication de clinker de ciment.
